Europäisches Patentamt

European Patent Office

Office européen des brevets

(11) Numéro de publication: **0 360 663**
**A1**

## (12) DEMANDE DE BREVET EUROPEEN

(21) Numéro de dépôt: 89402506.3

(51) Int. Cl.5: **A 01 N 25/12**

(22) Date de dépôt: 13.09.89

(30) Priorité: 23.09.88 FR 8812475

(43) Date de publication de la demande:
28.03.90 Bulletin 90/13

(84) Etats contractants désignés:
AT BE CH DE ES FR GB GR IT LI LU NL SE

(71) Demandeur: RHONE-POULENC CHIMIE
25, quai Paul Doumer
F-92408 Courbevoie Cédex (FR)

(72) Inventeur: Segaud, Christian
33, rue Jean de La Fontaine
F-69280 - Chassieu (FR)

(74) Mandataire: Fabre, Madeleine-France et al
RHONE-POULENC CHIMIE Service Brevets Chimie 25,
quai Paul Doumer
F-92408 Courbevoie Cédex (FR)

(54) Granules d'épendage et leur procédé de préparation.

(57) Granulés d'épendage à base d'une matière active phytosanitaire et d'un polyester sulfoné hydrodispersable comme liant.
Ils sont préparés par agglomération de la matière active avec
le liant et les autres constituants éventuels.

EP 0 360 663 A1

**Description**

## GRANULES D'EPENDAGE ET LEUR PROCEDE DE PREPARATION

La présente invention a pour objet des granulés d'épendage renfermant des matières actives phytosanitaires et leur procédé de préparation ; ces granulés ont la propriété de se déliter et de relarguer lentement la matière active, ce qui permet de traiter les sols d'une manière homogène.

Les granulés d'épendage à base d'au moins une matière active phytosanitaire, faisant l'objet de l'invention, contiennent un liant et sont caractérisés en ce que ledit liant comprend un polyester sulfoné hydrodispersable.

Parmi les matières actives phytosanitaires entrant dans la composition des granulés de l'invention, on peut citer les insecticides, les acaricides, les fongicides et leurs diverses associations, les herbicides, les nématicides, les molluscicides, les attractifs, les répulsifs, les rodenticides..

Comme exemples d'insecticides, on peut citer ceux qui appartiennent aux familles :
- des organo-halogénés ou chlorés ;
- des carbinols ;
- des organophosphorés ;
- des sulfones et sulfonates ;
- des carbamates ;
- des benzoyl urées ;
- les pyrethrinoides de synthèse.

Les fongicides peuvent être choisis parmi :
- les carbamates ;
- les dérivés du benzène ;
- les dérivés du phénol ;
- les quinones ;
- les dicarboximides ;
- les amines, les amides ;
- les diazines
- les sulfamides et dérivés soufrés ;
- les guanidines ;
- les composés hétérocycliques ;
- les monoéthyl phosphites métalliques ;
- les organostanniques.

A titre de substances chimiques présentant des propriétés herbicides, on peut faire appel à celles qui se retrouvent dans les familles chimiques suivantes :
- les composés phénoliques ;
- les carbamates ;
- les urées substituées ;
- les diazines ;
- les triazines ;
- les amides ;
- les ammoniums quaternaires ;
- les benzonitriles ;
- les toluidines ;
- les triazoles et autres.

Les polyesters sulfonés hydrodispersables pouvant constituer le liant sont des produits connus. Ils peuvent être préparés par co-condensation d'un diacide organique (tel qu'un diacide aliphatique saturé ou insaturé, un diacide aromatique, un diacide présentant plusieurs noyaux aromatiques, un diacide arylaliphatique), l'un de ses diesters ou son anhydride et d'un diacide organique sulfoné ou l'un de ses diesters avec un diol, en présence d'un catalyseur habituel de polyestérification tel que l'orthotitanate de tétraisopropyle.

Comme monomères de départ couramment utilisés pour la préparation des polyester sulfonés, hydrodispersables, on peut citer en tant que :
- diacides organiques : les diacides aliphatiques saturés ou insaturés, les diacides aromatiques, tels que les acides succinique, adipique, subérique, sébacique, les acides maléique, fumarique, itaconique, les acides orthophtalique, isophtalique, téréphtalique, les anhydrides de ces acides et leurs diesters comme les diesters méthyliques, éthyliques, propyliques, butyliques. Les composés préférés sont l'acide adipique, les acides orthophtalique, isophtalique, téréphtalique ;
- diacides organiques sulfonés : les diacides sulfonates de sodium ou leurs diesters tels que les dialcoylisophtalates et dialcoylsulfosuccinates comme le diméthylisophtalate-5 sulfonate de sodium ou le diméthylsulfosuccinate de sodium ;
- diols : les glycols aliphatiques tels que l'éthylèneglycol, le diéthylèneglycol, le dipropylèneglycol et les homologues supérieurs, le butanediol -1, 4, l'hexanedoiol-1,6, le néopentylglycol et les glycols cycliques tels que le cyclohexanediol, le dicyclohexanediolpropane. Les diols choisis préférentiellement sont l'éthylèneglycol et de diéthylèneglycol.

Les polyesters sulfonés hydrodispersables préférés sont ceux qui ont une masse moléculaire moyenne en nombre comprise entre 10.000 et 35.000, un indice d'acide inférieur à 5 mg de KOH/g, un taux de soufre compris entre 0,8 et 2 % en poids, de préférence entre 1,2 et 1,8 %.

La présente invention vise plus particulièrement des granulés d'épendage contenant :
- de 2 à 97% de leur poids, de préférence de 5 à 95 % de leur poids de matière active phytosanitaire
- de 0,3 à 40 % de leur poids, de préférence de 1 à 15 % de leur poids, tout particulièrement de 5 à 15 % de leur poids de liant polyester sulfoné hydrodispersable
- de 0 à 95 % de leur poids, de préférence de 0 à 85 % de leur poids d'une charge
- de 0 à 25 % de leur poids, de préférence de 0 à 10 % de leur poids d'un agent dispersant à propriété liante.

Les charges sont des composés inertes qui peuvent servir :
- soit de support de la matière active et des différents constituants s'ils sont liquides
- soit d'agent de dilution de la matière active.

Ce sont des produits naturels broyés tels que kaolin, attapulgite, bentonite, craie, talc ou des produits synthétiques comme la silice de précipitation, de combustion, le carbonate de calcium, etc...

Parmi les dispersants à propriété liante on peut citer les naphtalène sulfonates, les méthylnaphtalènesulfonates de sodium condensés, les 4,4 dihydroxydiphenylsulfones condensés, les sels de sodium ou de potassium de copolymères anhydride maléique-diisobutylène éventuellement en mélange avec un distyrylphénol éthoxylé.

Peuvent être présents à côté de ces principaux constituants :
- des agents tensio-actifs non-ioniques, anioniques ou cationiques; on peut citer :
. comme exemple d'agents tensio-actifs non-ioniques : les alcools gras éthoxylés ; les alkylphénols éthoxylés ; les esters d'acides gras et de glycérol ; les esters d'acides gras et de polyéthylène glycol ; les esters de sorbitan et d'acides gras éventuellement éthoxylés; les huiles et les graisses éthoxylées ; les mono et diéthanolamides d'acides gras éventuellemnt éthoxylés ; les copolymères "block" oxyéthylène / oxypropylène ; les sucroglycérides...
. comme exemple d'agents tensio-actifs anioniques : les sels alcalins ou d'ammonium d'acides gras ou d'acides aminocarboxyliques (n-acylsarcosinates) ; les sulfonates et dérivés sulfonés comme les alkylbenzène sulfonates, les naphtalène sulfonates, les lignosulfonates, les alcanesulfonates, les oléfines sulfonées, les dialkylsulfosuccinates, les amidosulfonates (N-acyl-N-alkyltaurates), les 2-sulfoéthylesters d'acides gras (acyl isethionates) ... ; les sulfates et dérivés sulfatés comme les alcools gras sulfatés éventuellement éthoxylés, les alkylphénols éthoxylés sulfatés, les acides gras sulfatés, les esters d'acides gras sulfatés, les alcanolamides sulfatés, les huiles et graisses naturelles sulfatées ... ; les esters phosphoriques d'alkylphénols éthoxylés ou d'alcools gras éthoxylés...
. comme exemple d'agents tensio-actifs cationiques : les oxydes d'amines, les alkylamines éthoxylées...
- d'autres liants tels que l'alcool polyvinylique, les sels de polyacrylates, la gomme xanthane
- des agents anti-statiques qui peuvent être des sels minéraux comme le chlorure de lithium ou des phosphates organiques tels que des phosphates d'alcools gras ou d'acides gras notamment le sel de potassium de l'acide tridécylphosphorique
- des agents protecteurs permettant de stabiliser la matière active vis-à-vis de l'oxydation, des rayons UV et des variations de pH (mélange tampon)
- d'autres additifs divers tels que colorants, adjuvants, répulsifs, attractifs.

Les granulés d'épendage faisant l'objet de l'invention sont obtenus par agglomération de la matière active avec le liant et les autres constituants éventuels.

L'opération d'agglomération peut être réalisée selon les procédés classiques de granulation par exemple en lit fluidisé, par atomisation si la température de fusion de la matière active le permet, par extrusion, par granulation sur plateau tournant...

Si la matière active se trouve à l'état liquide, il est tout-à-fait possible de l'absorber sur support pulvérulent pour avoir une présentation solide.

On choisit de préférence des silices précipitées à haut pouvoir absorbant mises en quantité suffisante pour obtenir une poudre sèche on bien des silicates de calcium.

On donne ci-après différents modes de préparation des granulés illustrant les différentes techniques de granulation, sans aucun caractère limitatif.

La préparation de granulés sur lit fluidisé consiste à faire un prémélange de la matière active solide (broyée ou absorbée sur support) avec tout ou partie de la quantité mise en oeuvre de liant et d'autres constituants éventuels, puis à pulvériser sur ce prémélange de l'eau contenant éventuellement la fraction de liant non prémélangé.

La matière est maintenue à l'état fluidisé à l'aide d'un courant d'air chaud ascendant de 20 à 80°C.

Lorsque les granulés sont formés, ils peuvent être séchés à l'aide d'un courant d'air chaud ayant une température inférieure à la température de fusion ou de décomposition de la matière active..

La taille des granulés obtenus peut varier dans d'assez larges mesures entre 0,1 et 2 mm.

La méthode de granulation par atomisation consiste à pulvériser dans un courant d'air chaud entre 140 et 240°C une bouillie concentrée (50 à 70 % d'extrait sec) contenant de l'eau, la matière active, le liant et les autres constituants éventuels.

La taille des granulés obtenus varie généralement entre 100 et 500 µm.

Un autre mode de granulation consiste à agglomérer la matière active sur un plateau tournant.

On charge sur le plateau tournant les matières solides (matière active, tout ou partie du liant et autres constituants éventuels) et l'on homogénéise le mélange desdites matières par rotation du plateau.

On effectue pour agglomérer la matière active une pulvérisation d'eau éventuellement additionnée d'une fraction de liant et d'agent tensio-actif sous forme liquide.

Les granulés ainsi obtenus doivent être séchés dans une deuxième étape jusqu'à une teneur en eau de 0,3 à 1 % suivant la matière active.

L'opération de séchage est réalisée à une température inférieure à la température de fusion ou de décomposition de la matière active. Elle peut être effectuée à l'air ou sous pression réduite.

La forme des granulés est plus ou moins sphérique et leur taille varie entre 100 et 500 μm.

La méthode de granulation par extrusion se déroule comme suit :

Dans une première étape on effectue une mélange poudre à poudre de la matière active broyée ou sur support, du liant sous forme solide et des autres constituents éventuels sous forme solide.

On humidifie le mélange obtenu par addition de 10 à 30 % en poids d'eau. L'adjonction d'eau peut se faire par pulvérisation.

Le mélange des constituants est effectué dans un mélangeur à poudres de type connu.

On réalise ensuite l'extrusion de la pâte obtenue effectuée généralement dans un équipement travaillant à faible pression.

Après extrusion, les granulés doivent être séchés.

Ils présentent des dimensions de l'ordre de 1 à 4 mm de longueur et de 0,5 à 2 mm de diamètre.

Les granulés d'épendage faisant l'objet de l'invention présentent l'avantage de se déliter et de relarguer lentement la matière active.

Cette propriété leur permet d'être utilisés pour le traitement des sols afin de lutter contre les parasites, pour la protection des cultures...

Les exemples suivants sont donnés à titre indicatif et ne peut être considérés comme une limite du domaine et de l'esprit de l'invention.

Les granulés d'épendages ont été préparés de la manière générale suivante :

On mélange :
- la ou les matière(s) active(s)
- éventuellement le support constitué de silice ZEOSIL 39 AB de RHONE-POULENC
- le liant à base de polyester sulfoné hydrodispersable
- du kaolin ARGIREC B24 commercialisé par Blancs Minéraux de Paris
- éventuellement un liant dispersant

dans un mélangeur rapide du type MORITZ commercialisé par MORITZ.

On humidifie par pulvérisation d'eau.

La pâte humide obtenue est ensuite extrudée dans une extrudeuse à rouleaux Alexander Werk AGM/R commercialisée par Alexander Werk.

On obtient ainsi des granulés de 1 mm de diamètre et de 2,5 mm de long.

Ceux-ci sont ensuite à l'étuve à 50°C pendant 1 heure puis tamisés à 200 microns afin d'éliminer les poussières.

Contrôle de délitage

Le contrôle de délitage des granulés est réalisé à l'aide d'un appareillage constitué d'une colonne de verre de 25 cm de hauteur utile et de 15 mm de diamètre intérieur garnie à sa base d'un verre fritté et munie :
- à sa partie inférieure d'un robinet
- à sa partie supérieure d'une pompe reliée à un réservoir d'eau distillée ; le débit de cette pompe est réglée à 11 ml/minute.

Un récipient collecteur est situé sous la colonne.

On introduit dans la colonne :
. 2 g de billes de verre de diamètre compris entre 0,5 et 0,75 mm
. en couches successives 0,2 g de granulés à tester et 8 g de billes de verre
. puis 2 g de billes de verre.

La colonne est remplie d'eau distillée, lentement au début puis rapidement jusqu'à hauteur de 15 cm au-dessus du garnissage.

La pompe est mise en marche et le robinet inférieur est ouvert de façon à maintenir constante la hauteur d'eau dans la colonne. Cette percolation est maintenue au débit de 11 ml/minute, en changeant le récipient collecteur toutes les 10 minutes.

On arrête le percolateur lorsque la dernière fraction collectée est parfaitement limpide, correspondant au délitage des granulés.

Plus le nombre de fractions non limpides recueillies est élevé, plus le délitage des granulés est lent.

Exemple 1

On prépare des granulés selon la méthode décrite ci-dessus à partir de :
- 7,5 g de diazinon adsorbé sur 5 g de ZEOLEX 39
- 6,5 g de GEROL PS 30 sec (polyester sulfoné hydrodispersable commercialisé par RHONE-POULENC)
- 80 g de kaolin
- 15 g d'eau.

4

Le résultat du test de délitage figure au tableau I.

Exemple 2

On répète l'opération décrite à l'exemple 1 en remplaçant les 6,5 g de GEROL PS 30 par 6,5 g de GEROL PS 20 sec, autre polyester sulfoné commercialisé par RHONE-POULENC.

Le résultat du test de délitage figure au tableau I.

Exemples 3 et 4

On répète l'opération décrite à l'exemple 1 en remplaçant les 6,5 g de GEROL PS 30 par :
- 6,5 g de GEROPON HB, polyacrylate de sodium de masse voisine de 5000 commercialisé par RHONE-POULENC (exemple 3)
- 6,5 g de GEROPON DG, polyméthacrylate de potassium de masse voisine de 3000 commercialisé par RHONE-POULENC (exemple 4).

Les résultats du test de délitage figurent au tableau I.

Exemple 5

On prépare des granulés selon la méthode décrite ci-dessus à partir de :
- 7,5 g de diazinon adsorbé sur 5 g de ZEOLEX 39
- 7,5 g de butocarboxim dissous dans 1,3 g de xylène et adsorbé sur 5,9 g de ZEOLEX 39
- 10 g de GEROL PS 30
- 62,8 g de kaolin
- 19 g d'eau.

Le résultat du test de délitage figure au tableau II.

Exemple 6

On répète l'opération de l'exemple 5 en remplaçant les 10 g de GEROL PS 30 par 10 g de RHODOVIOL 30/70, alcool polyvinylique commercialisé par RHONE-POULENC.

Le résultat du test de délitage figure au tableau II.

Exemple 7

On prépare des granulés selon la méthode décrite ci-dessus à partir de :
- 80 g de lindane préalablement broyé
- 5 g de GEROL PS 30
- 3 g de SUPRAGIL MNS 90, méthylnaphtalène sulfonate de sodium condensé commercialisé par RHONE-POULENC
- 12 g de kaolin
- 21 g d'eau

Le résultat du test de délitage figure au tableau II.

Les abréviations figurant aux tableaux I et II ont la signification suivante :

TT : très trouble
T : trouble
MT : moyennement trouble
LT : légèrement trouble
TLT : très légèrement trouble
TPT : très peu trouble
L : limpide

EP 0 360 663 A1

TABLEAU I

| FRACTION | EXEMPLE | | | |
|---|---|---|---|---|
| | 1 | 2 | 3 | 4 |
| | | ASPECT DE LA FRACTION | | |
| 1 | T | MT | TT | TT |
| 2 | T | MT | T | T |
| 3 | MT | MT | L | MT |
| 4 | LT | MT | | LT |
| 5 | LT | MT | | L |
| 6 | LT | MT | | |
| 7 | LT | TLT | | |
| 8 | LT | TPT | | |
| 9 | TLT | TPT | | |
| 10 | TLT | TPT | | |
| 11 | TLT | L | | |
| 12 | TLT | | | |
| 13 | L | | | |

TABLEAU II

| FRACTION | EXEMPLE | | |
|---|---|---|---|
| | 5 | 6 | 7 |
| | | ASPECT DE LA FRACTION | |
| 1 | T | T | T |
| 2 | T | T | T |
| 3 | MT | LT | MT |
| 4 | LT | TLT | LT |
| 5 | LT | L | LT |
| 6 | LT | | LT |
| 7 | LT | | TLT |
| 8 | LT | | L |
| 9 | TLT | | |
| 10 | TLT | | |
| 11 | TLT | | |
| 12 | L | | |

**Revendications**

1/ Granulés d'épendage à base d'au moins une matière active phytosanitaire et contenant un liant caractérisés en ce que ledit liant comprend un polyester sulfoné hydrodispersable.

2/ Granulés selon la revendication 1) caractérisés en ce que le polyester hydrodispersable est obtenu par co-codensation d'un diacide organique, l'un de ses diesters ou son anhydride et d'un diacide organique sulfoné ou l'un de ses diesters avec un diol, en présence d'un catalyseur de polyestérification.

3/ Granulés selon la revendiccation 2) caractérisés en ce que le diacide organique est un diacide aliphatique saturé ou insaturé, un diacide présentant plusieurs noyaux aromatiques ou un diacide arylaliphatique.

4/ Granulés selon la revendication 1 ou 2 caractérisés en ce que le diester de diacide organique sulfoné est un dialcoylisophtalatesulfonate de sodium ou un dialcoylsulfosuccinate de sodium.

5/ Granulés selon l'une quelconque des revendications 2 à 4 caractérisés en ce que le diol est un glycol aliphatique ou un glycol cyclanique.

6/ Granulés selon l'une quelconque des revendications précédentes caractérisés en ce que le polyester sulfoné hydrodispersable a une masse moléculaire moyenne en nombre comprise entre 10.000 et 35.000, un indice d'acide inférieur à 5 mg de KOH/g, un taux de soufre compris entre 0,8 et 2 % en poids.

7/ Granulés d'épendage caractérisés en ce qu'ils contiennent- de 2 à 97% de leur poids de matière active phytosanitaire
- de 0,3 à 40 % de leur poids de liant polyester sulfoné hydrodispersable
- de 0 à 95 % de leur poids d'une charge
- de 0 à 25 % de son poids d'un agent dispersant à propriété liante.

8/ Granulés selon la revendication précédente caractérisés en ce qu'ils contiennent :
- de 5 à 95 % de leur poids de matière active phytosanitaire
- de 1 à 15 % de leur poids de liant polyester sulfoné hydrodispersable
- de 0 à 85 % de leur poids d'une charge
- de 0 à 10 % de son poids d'un agent dispersant à propriété liante.

9/ Procédé de préparation des granulés d'épendage faisant l'objet de l'une quelconque des revendications précédentes, par agglomération de la matière active avec le polyester sulfoné hydrodispersable et les autres constituants éventuels.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-2 904 395 (CIBA-GEIGY AG) * Revendications 7-17,27; page 21, lignes 7-12 * | 1-9 | A 01 N 25/12 |
| A | FR-A-2 262 064 (CIBA-GEIGY AG) * Page 9, lignes 3-7; revendications 1-22,50 * | 1-9 | |
| A | EP-A-0 145 087 (SOLVAY & CIE SA.) * Page 2, lignes 22-25; page 3, ligne 34, page 4, ligne 9; page 6, ligne 30 - page 7, ligne 21; revendications 1-5 * | 1-9 | |
| A | EP-A-0 135 963 (NORDDEUTSCHE AFFINERIE AG) | 1-9 | |

DOMAINES TECHNIQUES
RECHERCHES (Int. Cl.5)

A 01 N
C 08 G

Le présent rapport a été établi pour toutes les revendications

| Lieu de la recherche | Date d'achèvement de la recherche | Examinateur |
|---|---|---|
| LA HAYE | 24-11-1989 | RAVANEL C.M. |

EPO FORM 1503 03.82 (P0402)